# EUROPEAN PATENT APPLICATION

(11) **EP 2 410 294 A1**
(43) Date of publication of application: **25.01.2012**
(21) Application number: 10007578.7
(22) Date of filing: 21.07.2010
(51) Int. Cl.: G01C 21/32, G01C 21/34

(54) **Method and device for providing cost information associated with junctions and method of determining a route**

(71) Applicant: Harman Becker Automotive Systems GmbH, 76307 Karlsbad (DE)
(72) Inventor: Kluge, Sebastian, 81669 München (DE); Pryakhin, Alexey, 81476 München (DE); Kunath, Peter, 80999 München (DE)
(74) Representative: Bertsch, Florian Oliver

(57) **Abstract**

A method and device for providing cost information associated with junctions of a road network are provided. Driving data (7) indicative of at least one condition of a vehicle upon passage of the vehicle through a plurality of junctions are retrieved. For each junction of the plurality of junctions, a set of feature values (9) associated with the respective junction is determined based on map data (8). Parameters of a junction cost model (5) are adjusted. The junction cost model (5) is configured to provide a cost value (16) in response to a set of feature values (15) associated with a junction. The parameters of the junction cost model (5) are adjusted based on the received driving data (7) and the sets of feature values (9) determined for the plurality of junctions. The junction cost model (5) may be used for route search.

## Description

### Technical Field

The invention relates to a method and a device for providing cost information, such as information on a travel time, fuel consumption or similar, for junctions in a road network. The invention in particular relates to such a method and device that may provide cost information for junctions in vehicular navigation. The invention further relates to a method of determining a route.

### Background

Performing route searches in road network has become increasingly important. Such route searches are performed based on map data in a map data base that provides information on, inter alia, road segments, their connectivity, and possibly additional information such as the orientation and length of the road segment. Technically, road segments and junctions form a graph on which a route search is performed. To perform a route search, a least-cost search is performed on the graph based on a cost model. Different cost models may be employed to find routes that are optimized with regard to different quantities. For illustration, a cost model that provides information on the travel time associated with the different road segments in the road network is used for a fastest route search. A cost model that provides information on the fuel consumption associated with the different road segments in the road network is used for a search for a route having optimum fuel consumption. The cost information associated with the different road segments for the various cost models, such as fastest route, route having least fuel consumption etc., may also be provided in a data base.

For various cost models, the costs associated with junctions may significantly affect the result of the route search. For illustration, waiting times at road intersections in an urban area may significantly add to the total costs in terms of time or fuel consumption that are associated with a route. It is desirable to take into account such costs associated with junctions in route searches. When information on the costs associated with junctions are set by a human expert, the cost values may not correctly reflect the manifold types of junctions that exist and maneuvers that can be performed thereon. Storing individual cost values for junctions on a per junction basis may significantly add to storage space requirements.

There is a need in the art for a method and device for providing cost information associated with junctions and for a method of determining a route that utilizes such information. In particular, there is a need in the art for such methods and devices that account for the fact that there are manifold types of junctions and possible maneuvers performed thereon. There is also a need in the art for such methods and devices that keep the storage spare required for providing the cost information associated with junctions at moderate levels.

### Summary

These and other needs are addressed by methods and devices as defined by the independent claims. The dependent claims define embodiments.

According to an aspect, a method of providing cost information associated with junctions in a road network is provided. For a plurality of junctions, driving data indicative of at least one condition of a vehicle upon passage of the vehicle through the plurality of junctions is received. For each junction of the plurality of junctions, a set of feature values associated with the respective junction is determined based on map data. Parameters of a junction cost model are adjusted based on both the received driving data and the determined sets of feature values for the plurality of junctions. The junction cost model, the parameters of which are adjusted, is configured to provide a cost value associated with a given junction in response to receiving a set of feature values that are associated with the given junction.

In the method, a junction cost model is utilized. The junction cost model is implemented such that it provides cost information in response to a set of feature values being supplied to the junction cost model. This configuration allows manifold different types of junctions and maneuvers performed thereon to be taken into account. Different classes of junctions and maneuvers may be associated with different sets of feature values that are supplied to the junction cost model. A differentiation between the various types of junctions can be made. By querying the junction cost model with a set of feature values, the cost information for a junction having the set of feature values can be determined. The junction cost model can be adjusted in adaptive systems, or can be extended to cover additional cost models when desired, without such adaptation or extension requiring extensive modifications of a map data base.

In the method, the parameters of the junction cost model are adjusted based on driving data that reflect a condition, e.g. a speed or a fuel consumption rate, of a vehicle upon passage through a plurality of junctions. The plurality of junctions may be significantly smaller in number than the total number of junctions in the road network. The sets of feature values that are associated with the various junctions of the plurality of junctions are determined based on map data. The parameters of the junction cost model are adjusted based on the driving data and the determined sets of feature values. The junction cost model may thus be adapted, by training the model based on the driving data and corresponding sets of feature values, so that it is based on data that have been acquired upon passage through different types of junctions, as reflected by the determined sets of feature values. By aggregating information reflecting the condition of the vehicle upon passage through different junctions and the associated junction features, a good junction cost model may be established.

Different implementations of the junction cost model and of the parameters that are adjusted are conceivable. In an embodiment, the junction cost model may be configured as, or may include, a multi-dimensional look-up table which stores, for plural sets of feature values, respectively an associated cost value. In this case, the entry of the look-up table may be adjusted. In another embodiment, the junction cost model may be configured as a mathematical function or algorithm, and the parameters may represent coefficients of the function or algorithm. In this case, the coefficients may be adjusted. In another embodiment, the junction cost model may provide cost information that is generated by simulating the behaviour of a vehicle upon passage through a junction having a set of feature values. In this case, a random parameter on which the simulation is based may be selected from a distribution that is determined based on the driving data and the sets of feature values determined for the various junctions represented by the driving data.

The cost model may be a cost model which provides information indicative of a travel time or fuel consumption incurred upon passage through the junction when queried with a set of feature values.

For each junction of the plurality of junctions, the set of feature values may be determined based at least on road classes of road segments connected to the junction and/or directions of the road segments at the junction. These characteristics of a junction affect the costs associated with a maneuver on the junction. The term "road class" as used herein refers to any quantity indicative of a functional classification of roads. Examples for road classes include the functional road class (FRC) without being limited thereto.

For each junction of the plurality of junctions, the set of feature values may be determined based on information on a junction, which does not change as a function of time. The set of feature values may be determined based on information retrieved from static map data of a map data base.

Alternatively or additionally, the set of feature values may also be determined in a dynamic manner, i.e. depending on a time of day and, optionally, day information. For illustration, the set of feature values may be determined based at least on traffic patterns of the road segments connected to the junction and directions of the road segments at the junction. Information on a time of day upon passage of the vehicle through the respective junction and, optionally, information on the day of the week may be retrieved, and may be utilized for adjusting parameters of the junction cost model. For illustration, the junction cost model may be adapted to provide a cost value in response to feature values that correspond to traffic patterns and a direction change, and the parameters of this cost model may be adapted utilizing the determined traffic patterns.

For each junction of the plurality of junctions, the set of feature values may be determined based at least on a road class or traffic pattern of an incoming road segment, a road class or traffic pattern of an outgoing road segment and a maneuver classification indicative of a direction change when travelling from the incoming road segment to the outgoing road segment. These characteristics of a junction affect the costs associated with a maneuver on the junction. For illustration, a waiting time or fuel consumption incurred upon passage through a junction will depend on whether passage is made from a road segment having a higher road class to a road segment having a lower road class or vice versa, and on whether the passage between the incoming and outgoing road segment involves going straight, turning left, turning right, or making a U-turn. Further, for any maneuver, information on the road classes of the incoming and outgoing road segments and an angle enclosed by these road segments at the junction can be determined based on the map data.

The set of feature values may be an n-tuple with n greater than or equal to 2, in particular with n greater than or equal to 3. The junction cost model may be configured to provide the cost value in response to being queried with an n-tuple of feature values. Thereby, a classification of junctions with regard to different junction features may be implemented. The junction cost model may be trained using the n-tuples of feature values that have been determined for the various junctions through which the vehicle has passed while the driving data has been recorded.

A measurement-based cost value associated with a junction having a selected set of feature values may be determined based on the driving data. The parameters of the junction cost model may be adjusted based on the measurement-based cost value. This allows a parameter matching to be performed. The selected set of feature values may be input to the junction cost model, the cost value provided by the junction cost model may be compared to the measurement-based cost value, and the parameters of the junction cost model may be adjusted based on the comparison. Efficient methods for implementing such steps are known, which may be based, for example, on a multi-dimensional regression analysis in the space spanned by the different sets of feature values.

The driving data may include information on a speed or fuel consumption rate of the vehicle as a function of time. This information may be analyzed to determine the measurement-based cost value. For illustration, a speed profile as a function of time may be analyzed to identify a characteristic delay or waiting time upon passage through a junction, a characteristic speed of the vehicle in the junction area, a number of stops at a traffic light incurred prior to entering the outgoing road segment, or similar.

The measurement-based cost value may be determined based on an analysis of the driving data, and cost values associated with the incoming and/or outgoing road segment for a given maneuver. For junctions in which the effect of the junction has a significant impact on the vehicle speed or other vehicle conditions while the vehicle is still far away from the actual point of intersection of road segments, corrections may be implemented to avoid double-counting of costs. For illustration, if the analysis of the driving data shows that the vehicle has to stop on a section of the incoming road segment extending over a distance before the actual point of intersection, the time period spent in the junction area as determined from the driving data may be adjusted to avoid double-counting of costs. The costs, such as time or fuel consumption, which are associated with the section of the incoming road segment in which the junction affects the driving pattern, may be determined. The cost value for the junction determined from the driving data may be decremented by these costs associated with the section of the incoming road segment, so as to avoid double-counting of costs in route determination.

The measurement-based cost value may be determined so as to be indicative of a total time or a total fuel consumption incurred upon passage through the junction having the selected set of feature values. Thereby, a junction cost model for use with a fastest route search or a minimum fuel consumption route search may be implemented.

In order to determine the measurement-based cost value, plural simulations of a passage of the vehicle through the junction having the selected set of feature values may be performed. Each one of the simulations may be performed based on at least one input parameter selected from a random distribution. The random distribution may be selected based on the driving data associated with the junction having the selected set of feature values. Thereby, by extracting one or a few characteristics from the measured driving data, such as an average waiting time at junctions having the selected set of feature values, a larger data amount can be generated by simulation to serve as basis for adjusting the parameters of the junction cost model.

The measurement-based cost value may be determined for a plurality of selected sets of feature values. Thereby, the value returned by the junction cost model may be tested against measured data for a large variety of sets of feature values.

A regression analysis may be performed on the measurement-based cost values determined for the plurality of selected sets of feature values. The regression analysis may be performed on the space spanned by the different sets of feature values. This allows the parameters of a cost model to be adjusted in an efficient manner.

The method of providing cost information for junctions according to aspects and embodiments described herein may be, but does not need to be performed onboard a vehicle. For illustration, the method of providing cost information may be performed by a stationary computing device that evaluates historical log files of driving data. Thereby, a junction cost model may be established that may be supplied as a component of a navigation system to be installed in a vehicle.

The method of providing cost information serves to adjust parameters of a junction cost model and may also be performed onboard a vehicle to adapt a junction cost model in a vehicle- and/or driver specific manner.

The driving data may be received from a board network of the vehicle. The parameters may be adjusted onboard the vehicle. This allows a junction cost model to be adapted in a vehicle-specific manner. The driving data may be received from a CAN-bus of a vehicle.

One of a plurality of drivers of the vehicle may be identified. The parameters of the junction cost model may be adjusted in a driver-specific manner.

According to another aspect, a computing device is provided which is configured to provide cost information for junctions in a road network. The computing device may be configured as a navigation device. The computing device comprises an interface configured to receive, for a plurality of junctions, driving data indicative of at least one condition of a vehicle upon passage of the vehicle through the respective junctions. The device comprises a storage unit configured to store map data. The device comprises a processor which is configured to determine, for each junction of the plurality of junctions, based on the map data a set of feature values associated with the respective junction, and to adjust parameters of a junction cost model based on the driving data received at the interface and the sets of feature values determined for the plurality of junctions. The junction cost model is configured to provide a cost value in response to a set of feature values associated with a junction.

The junction cost model may for example be a cost model indicative of a travel time or fuel consumption incurred upon passage through junctions.

The at least one condition of the vehicle may be, or may include, a speed profile of the vehicle upon passage through the junctions. The at least one condition of the vehicle may be, or may include, a fuel consumption rate upon passage through the junction. The driving data may be analysed to establish characteristics of the speed and/or fuel consumption rate profile upon passage through the junctions. The characteristics may include a total time or a total fuel consumption incurred when performing the maneuver on the junction. The driving data may be correlated with the sets of feature values determined based on the map data for the different junctions. The parameters of the junction cost model may be adjusted based on the characteristics established based on an analysis of the driving data and the sets of feature values determined based on the map data. Thereby, a junction cost model may be established that can provide a junction cost value, such as a time delay or fuel consumption associated with a passage through a junction, when queried with a set of feature values associated with the junction, which can be determined based on the map data.

Different implementations of the junction cost model and of the parameters that are adjusted are conceivable, as has been explained with regard to the methods according to embodiments. For illustration, the processor of the computing device may accordingly be configured to adjust entries of a look-up table, when the junction cost model is implemented as a look-up table. The processor may also be adapted to adjust coefficients or other parameters in a computing procedure that is utilized to determine the cost value for a junction as a function of the set of feature values associated with the junction. The processor may also be configured to simulate the behaviour of a vehicle upon passage through a junction having a set of feature values. In the latter case, the processor may select at least one random parameter for performing the simulation from a distribution that is determined based on the driving data and the sets of feature values determined for the various junctions represented by the driving data.

The processor may be configured to determine the set of feature values based at least on road classes of road segments connected to the junction and/or directions of the road segments at the junction. These characteristics of a junction affect the costs associated with a maneuver on the junction.

The processor may be configured to determine the set of feature values for a given maneuver on a given junction of the plurality of junctions based at least on a road class of an incoming road segment, a road class of an outgoing road segment and a maneuver classification indicative of a direction change when travelling from the incoming road segment to the outgoing road segment. The road classes of road segments and the maneuver classification can be determined based on the map data.

The processor may be configured to determine the sets of feature values using junction attributes that are retrieved from the map data base. Additionally, information on road segments connected to the junction may be retrieved from the map data base. The retrieved information may be processed to determine the set of feature values.

The processor may be configured such that the set of feature values, which is utilized to adjust the parameters of the cost model and to subsequently query the cost model, is an n-tuple with n equal to or greater than 2, in particular with n equal to or greater than 3.

The computing device may be configured as a stationary computing device. The computing device may also be configured as a navigation device to be installed onboard a vehicle. This allows parameters of a junction cost model to be adjusted in a vehicle- or driver-selective manner. In use, the computing device may be coupled to a vehicle board network.

The computing device may be configured to perform the method of any one aspect or embodiment described herein.

According to another aspect, a computer program product is provided. The computer program product comprises instruction code which, when executed by a processor of a computing device, directs the processor to perform the method for providing cost information for junctions of any one aspect or embodiment described herein. The computer program product may be implemented by instruction code stored on a storage medium, in particular a non-transitory storage medium.

The junction cost model with the parameters adjusted using a method for providing cost information of any one aspect or embodiment described herein may be utilized by a navigation device onboard a vehicle. The junction model may be queried with a set of feature values for a junction to obtain a cost value associated with the junction for use in, for example, route search.

According to another aspect, a method of determining a route on a road network is provided. In the method, a junction for which a cost value is to be determined is identified. The junction for which a cost value is to be determined may for example be identified in an expansion step of a Dijkstra-algorithm, A*-algorithm, or other route search algorithm in which a new edge or node of a graph is explored. Based on map data, a set of feature values associated with the identified junction is determined. The determined set of feature values are provided as input parameters to a junction cost model. A cost value for the identified junction is retrieved from the junction cost model in response to the set of feature values. The cost value is used in a route search.

In the method of determining a route, the junction cost model allows the cost value associated with a given junction to be established. A set of feature values associated with the respective junction is determined based on map data. The junction cost model provides a cost value which is a function of the set of feature values. Adaptation of the costs associated with different junctions, which may be desirable to accommodate new cost models or a vehicle- or driver-specific routing, can be readily performed by adapting the junction cost model.

In the method of determining a route, the set of feature values for the identified junction may be determined based at least on road classes of road segments connected to the identified junction or directions of the road segments at the junction.

In the method of determining a route, the set of feature values for the identified junction may be determined based at least on a road class of an incoming road segment, a road class of an outgoing road segment and a maneuver classification indicative of a direction change when travelling from the incoming road segment to the outgoing road segment.

In the method of determining a route, the set of feature values may be an n-tuple with n equal to or greater than 2, in particular with n equal to or greater than 3.

The method of determining a route may utilize a junction cost model having parameters that have been adjusted with the method of providing cost information according to any one aspect or embodiment described herein.

According to another aspect, a navigation device is provided which is configured to perform the method of determining a route according to an aspect or embodiment.

It is to be understood that the features mentioned above and those yet to be explained below can not only be used in the respective combinations indicated, but that other embodiments may be implemented that include those features in other combinations or in isolation.

### Brief Description of the Drawings

Embodiments will be described with reference to the accompanying drawings.
Fig. 1 is a schematic block diagram of a device for providing cost information for junctions and a navigation device using a cost model.
Fig. 2A is a schematic block diagram of a vehicle having a navigation device when the navigation device is operative to adjust parameters of a junction cost model, and Fig. 2B is a schematic block diagram of the vehicle when the navigation device is operative to perform a route search.
Fig. 3 is a schematic diagram of a portion of a road network.
Figs. 4A-4C represent portions of driving data for illustrating a method of providing cost information.
Fig. 5 is a schematic diagram of a junction for illustrating the extraction of a set of feature values.
Fig. 6 is a flow diagram representation of a method of providing cost information for junctions.
Fig. 7 is a flow diagram representation of a method of providing cost information for junctions.
Fig. 8 is a schematic functional block diagram of a device for providing cost information for junctions.
Fig. 9 is a diagram illustrating a simulation of vehicle behaviour upon passage through a junction performed by a device for providing cost information for junctions.
Fig. 10 is a flow diagram representation of a route search method utilizing a junction cost model.

### Detailed Description of Preferred Embodiments

Hereinafter, embodiments of the invention will be described with reference to the drawings. It is to be understood that the present invention is not limited to the specific embodiments described herein and that the features of the various embodiments may be combined with each other, unless explicitly stated otherwise.

The description of embodiments is given for the purpose of illustration and is not to be taken in a limiting sense. The drawings are to be regarded as being schematic representations only. Illustrated functional blocks or units shown in the drawings are not to be construed as indicating that these units necessarily are implemented as physically separate units. Rather, functional blocks or units shown or described may be implemented as separate units, circuits, chips or circuit elements, or may be combined into integrated units. Functional units may be implemented in hardware, software, or a combination thereof.

According to embodiments of the invention, methods and devices for providing cost information for junctions of a road network are provided. In these methods and devices, parameters of a junction cost model are adjusted. To this end, driving data which have been or are recorded upon passage of a vehicle through junctions are analyzed. Characteristics associated with the driving data, such as a number of times the vehicle has to stop at a junction, a minimum speed upon passage through the junction, a characteristic waiting time when stopping at a junction, or similar, may be extracted from the driving data for plural different junctions. A set of feature values is determined for each one of the different junctions based on map data. The set of feature values may in particular be determined based on static map data and information on a particular maneuver performed on the junction, such as incoming and outgoing link, while recording the driving data. For each one of plural junctions, characteristics of the driving data in combination with the associated set of feature values for the respective junction may be utilized to adjust parameters of the junction cost model.

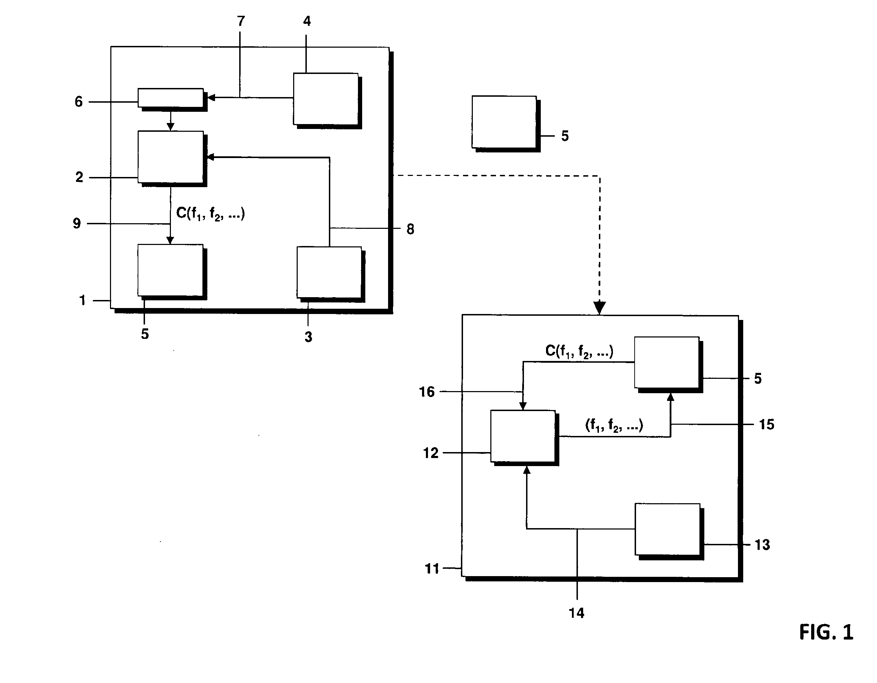

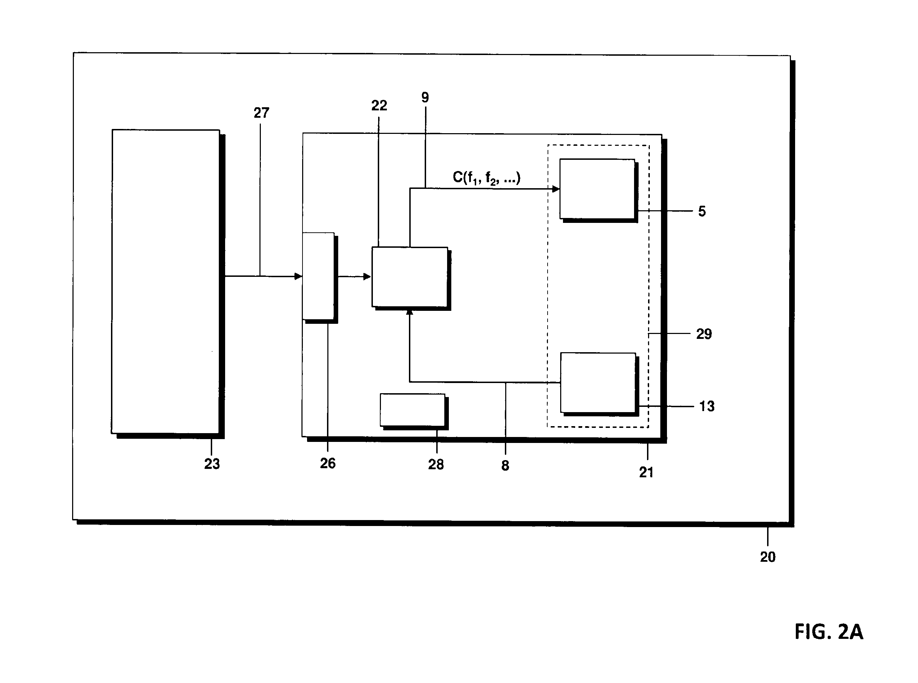

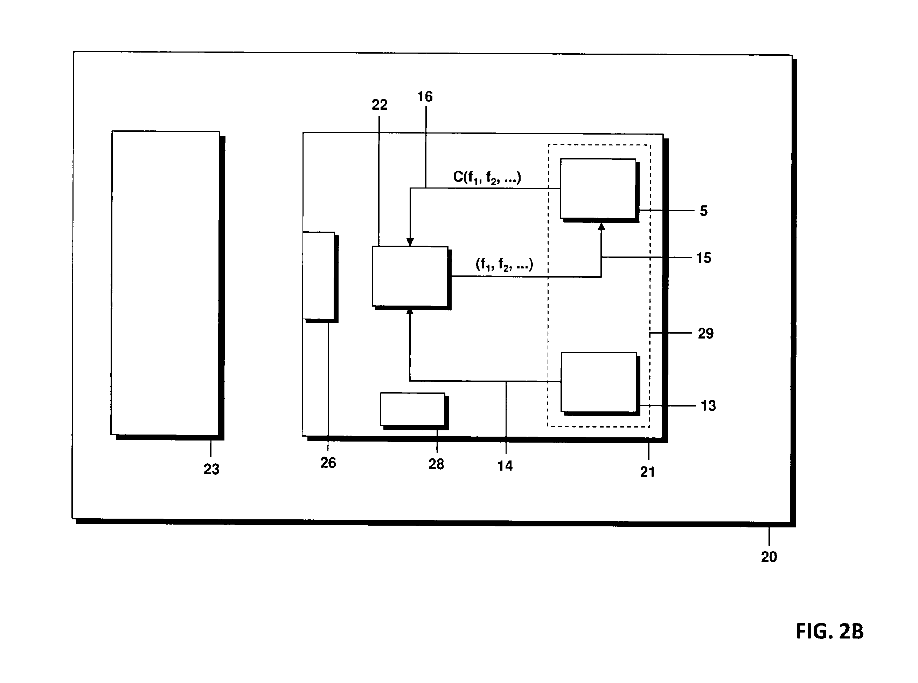

Adjusting parameters of the junction cost model may be performed separate from onboard navigation, for example using a stationary computer system, as will be explained with reference to Fig. 1. The parameters of the junction cost model may alternatively or additionally be adjusted onboard a vehicle, as will be explained with reference to Fig. 2.

Fig. 1 shows a block diagram of an electronic computing device 1 and of a navigation device 11. The computing device 1 adjusts parameters of a junction cost model based on driving data and sets of feature values of junctions determined based on map data. The computing device 1 thereby acts as computing device for providing cost information according to an embodiment. The navigation device 11 is adapted to be installed onboard a vehicle and utilizes the junction cost model with the parameters adapted by the computing device 1.

The computing device 1 includes a processor 2, a map data base 3 coupled to the processor 2 and a storage unit 4 in which driving data are stored, for example as a historical log file. The map data base 3 has stored therein map data associated with a road network. For junctions of the road network, the map data base 3 may include at least information on road segments connected to the respective junctions. The map data base 3 also includes information on the road segments, which may include information on a classification of the road segments and directions of the road segments in proximity to the various junctions. The map data base 3 may include additional information associated with the junctions of the road network, such as information on turning restrictions imposed at the junctions, the presence or absence of traffic lights at the various road segments, the names of cross roads, the lane connectivity or similar.

The storage unit 4 has stored therein driving data that represent information on a vehicle condition upon passage through a plurality of junctions. The information stored in the storage unit 4 may include a speed profile and/or a fuel consumption rate of a vehicle recorded upon passage through a plurality of junctions, as a function of time. Additional information may be included in the information stored in the storage unit 4, such as time or position stamps. The position stamps may be position data obtained using a GPS or other positioning system while recording the speed profile and/or fuel consumption rate of the vehicle. The processor 2 retrieves the driving data 7 from the storage unit 4 via an interface 6. To this end, the processor 2 may output a request to the storage unit 4, which provides the driving data in response thereto.

The processor 2 retrieves the map data 8 including information on a junction from the map data base 3 in order to establish a set of feature values for a junction through which the vehicle has passed when recording the driving data. To this end, the processor 2 may output a request to the map data base 3, which provides the information on the junction in response thereto. The processor 2 retrieves the driving data 7 from the storage unit 4. The processor 2 analyzes the driving data 8 associated with a junction through which the vehicle has passed to establish certain characteristics associated with the vehicle condition upon passage through this junction. The processor 2 determines a set of feature values associated with the junction based on the map data. The processor 2 performs the analysis of the driving data 7 and the determination of an associated set of feature values based on the map data 8 for a plurality of different junctions to adjust parameters of a junction cost model 5.

The processor 2 may perform various procedures to adjust the parameters of the junction cost model. The processor 2 may analyze the driving data 7 to identify a junction based on a speed profile or fuel consumption rate of the vehicle. The processor 2 may then retrieve map data 8 associated with the junction from the map data base 3. The processor 2 may generate an n-tuple (f₁, f₂, ...) of feature values f₁, f₂, etc. that are associated with the respective junction. At least one of the feature values determined by the processor 2 may be determined based on road classes of road segments connected to the respective junction. At least another one of the feature values determined by the processor 2 may be determined based on direction information on the road segments connected to the respective junction, which can be retrieved from the map data base 8. The processor 2 may generate an n-tuple (f₁, f₂, f₃,...) of feature values with n equal to or greater than 3. One of the feature values may represent a road class of an incoming road segment for the maneuver on the junction represented by the driving data 7. Another one of the feature values may represent a road class of an outgoing road segment for the maneuver on the junction represented by the driving data 7. Yet another one of the feature values may represent a direction change incurred upon passage through the junction, such as an angle enclosed by the incoming and outgoing road segments. A discretization of the angle may be employed. For illustration, the angle may be discretized so that discrimination is made between going straight, right turn, left turn, and U-turn.

The set of feature values may also be determined in a more complex manner. For illustration, in order to account for dynamic traffic situations, traffic patterns associated with incoming and outgoing road segments may be determined. Information on a time and day may be utilized to determine the traffic patterns. Additionally or alternatively, traffic information signals may be utilized to determine the junction feature values or to adjust these feature values. Examples for such traffic information signals include TMC or TPEG messages. Data extracted from the traffic information signal may be used as a feature value or may be utilized to adjust another feature value, for example so as to account for traffic conditions broadcast in the traffic information signal.

The processor 2 may analyze the driving data 7 in various ways in order to establish one or plural characteristics associated with the passage through a junction based on the driving data. For illustration, the processor 2 may analyze the driving data 7 to identify a total time required for passage through the junction. Alternatively or additionally, the processor 2 may analyze the driving data 7 to identify a total number of stops that the vehicle has undergone at the junction prior to entering the outgoing road segment. Alternatively or additionally, the processor 2 may analyze the driving data 7 to identify a mean velocity upon passage through the junction. Alternatively or additionally, the processor 2 may analyze the driving data 7 to identify a total fuel consumption incurred upon passage through the junction. The latter quantity can be established for example based on a fuel consumption rate recorded as a function of time, or based on a speed profile in combination with a vehicle model. The thus determined quantity may be regarded to be a cost value associated with a specific junction, which is determined based on the recorded driving data. This measurement-based cost value in combination with the set of feature values associated with the junction may be used to adjust the parameters of the junction cost model 5.

The processor 2 may use different procedures to adjust parameters of the junction cost model 5. In one implementation, the processor 2 may perform a multi-dimensional regression analysis on the measurement-based cost values, determined based on the driving data, for different sets of feature values of the associated junctions, as determined based on the map data. For illustration, the processor 2 may determine a measurement-based cost value c(1) for passage through a first junction by analysis of the driving data, a measurement-based cost value c(2) for passage through a second junction by analysis of the driving data, etc. The values c(1), c(2), etc. may represent a time delay or fuel consumption incurred upon passage through the respective junction. The processor 2 may further determine that the first junction is associated with a set of feature values (f₁(1), f₂(1), f₃(1)) while the second junction is associated with a set of feature values (f₁(2), f₂(2), f₃(2)) etc.. The processor 2 may then perform a regression analysis to determine a function in the n-tuples of feature values which approximates the measurement-based cost values. The number of junctions for which driving data are analyzed may be selected so as to be greater than the number of possible different sets of feature values. For illustration, if the set of feature-values is a 3-tuple having the road class of the incoming road segment, the road class of the outgoing road segment, and a direction change discretized in 90°-steps as entries, the number of junctions for which driving data are analyzed may be selected to be greater than the number of possible road classes squared, multiplied by four (indicating the possible direction changes).

In another implementation, the processor 2 may alternatively or additionally perform a simulation of the vehicle passage through the junction, sampled, for example, over different waiting times prior to entering the outgoing road segment, different minimum speeds in the junction area, or different outgoing speeds. The different waiting times or minimum speeds in the junction area may respectively be selected according to a probability distribution that depends on the driving data 7 for junctions having a specific set of feature values (f₁, f₂, ...). For each one of the simulations, a simulated cost value may be determined. The simulated cost value may represent, for example, a total time or total fuel consumption incurred upon the simulated passage through the junction having the set of feature values (f₁, f₂, ...). If the simulated cost value is a total fuel consumption, the simulated cost value may be determined for example by simulating a speed profile upon passage through the junction and determining the total fuel consumption based thereon using a vehicle model. The simulated cost values determined in the different simulation runs may be averaged to determine the cost value for junctions having the set of feature values (f₁, f₂, ...). The thus determined cost value is also measurement-based, as the probability distribution(s) used in simulating the passage through the junction are set based on the driving data. The simulations may be performed for various sets of feature values (f₁, f₂, ...), respectively based on the driving data associated with junctions having this set of feature values or a similar set of feature values.

Irrespective of the specific implementation of determining the cost value, the processor 2 may also determine additional information on the statistical distribution of costs that have been incurred when travelling through junctions having a given set of feature values. For illustration, a variance or mean square deviation of costs from the mean value determined in a regression analysis or by performing plural simulations may be established. The information on the statistical distribution may be used to adjust parameters of the junction cost model. For illustration, the junction cost model may include, for each n-tuple of feature values, not only information on a mean cost value but also information on a statistical distribution about the mean value, such as the variance. Both the mean value and the variance may be adjusted using the driving data. The information may be utilized to determine the variance of costs in a subsequent route search, which is performed based on the junction cost model.

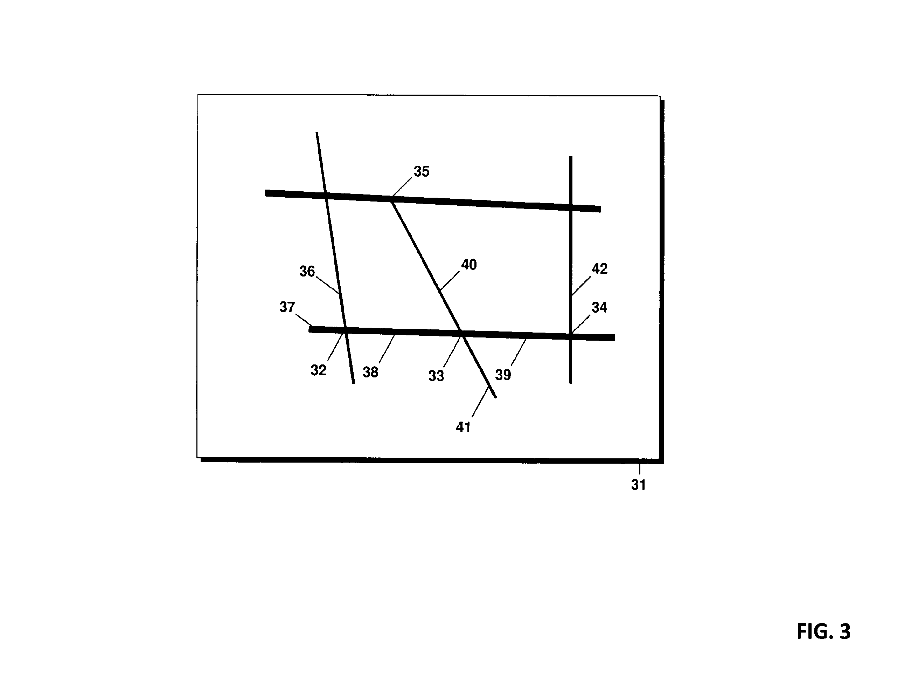

In yet other implementations, the processor 2 may perform other procedures to adjust parameters of the junction cost model, some of which will be described in more detail with reference to Figs. 3-9.

The junction cost model 5 may be implemented in different ways. For illustration rather than limitation, the junction cost model 5 may include a look-up table which respectively has a cost value entry for plural different sets of feature values. The processor 2 may determine the cost values associated with junctions having various sets of feature values (f₁, f₂, ...), for example using regression analysis or vehicle passage simulations, and can overwrite or update entries in the look-up table 5 by writing new data 9 into the look-up table. If the entries in the look-up table are updated, a weighted average of the old entries of the look-up table and the cost values determined based on the new driving data 7 may be computed to generate the new cost values 9. The weighting factors may be determined based on the size of the data set that has formed the basis for the old entries in the look-up table and the size of the data set, e.g., the number of junctions in the driving data 7 having a specific set of feature values (f₁, f₂, ...), which is processed to update the entries in the look-up table.

The junction cost model 5 may also be implemented as a procedure in software or firmware. The processor 2 may be configured to adjust parameters of the procedure. The adjusted parameters may be coefficients of a polynomial in the feature values or similar.

The junction cost model 5 may also include a simulation machine that simulates passage of a vehicle through a junction having a specific set of feature values. The processor 2 may then be configured to adjust probability distributions for parameters used in simulation runs based on the characteristics of the driving data 7 determined by analyzing the driving data and the associated set of feature values. Such probability distributions may include probability distributions for incoming or outgoing speeds, waiting times, number of stops, minimum velocities in the junction area.

For the various implementations described above, the junction cost model 5 is adapted based on driving data indicative of a vehicle condition upon passage through a junction and a set of feature values associated with the respective junction, aggregated over plural different junctions. The thus established junction cost model 5 can be accessed using a set of feature values associated with a given junction as input, to retrieve a cost value associated with the given junction from the junction cost model 5. To this end, the junction cost model 5 can be deployed to one or plural navigation devices 11, as illustrated by the broken line in Fig. 1. The junction cost model 5 may be deployed to the navigation device as part of the software, firmware, or as part of a data base of the navigation device 11. The navigation devices 11 may be installed in various types of vehicles, which do not need to be identical to the vehicle used for recording the driving data stored in the storage unit 4.

The navigation device 11 includes a processor 12, a map data base 13 and the junction cost model 5. The map data base 13 may be identical to the map data base 3 of the computing device, but does not need to be identical to the map data base 3. The map data base 13 may be configured so as to allow the processor 12 to respectively determine, for junctions in a road network, the classification of road segments connected to a junction and the angles between the road segments at the junction. Additional information may be included in the map data base, such as information on turning restrictions, traffic lights located at various road segments at the junction, lane connectivity or crossroad names.

When information on a cost value associated with a junction is required, for example in a route search, the processor 12 retrieves map data 14 on the junction from the map data base 13. Based on the map data 14, the processor 12 determines a set of feature values that are associated with the junction. The set of feature values may be an n-tuple and may be determined identically to the set of feature values used when adjusting parameters of the junction cost model 5. In one implementation, the processor 12 may generate an n-tuple (f₁, f₂, f₃,...) of feature values with n equal to or greater than 2, based on the map data. One of the feature values may represent a road class of an incoming road segment for the maneuver on the junction contemplated in the route search. Another one of the feature values may represent a road class of an outgoing road segment for the maneuver on the junction contemplated in the route search. Yet another one of the feature values may represent a direction change incurred in the junction contemplated in the route search, such as an angle enclosed by the incoming and outgoing road segments. A discretization of the angle may be employed. For illustration, the angle may be discretized so that a discrimination is made between going straight, right turn, left turn, and U-turn. The processor 12 may query the map data base 13 several times in order to generate the n-tuple of feature values. For illustration, names or identifiers of road segments may be retrieved from the map data base 13 in a first query, and this information may subsequently be used to retrieve information on road classes and directions of the road segments in a second query.

The processor 12 queries the junction cost model 5, using the set of feature values 15 determined for a junction as input. In response, a cost value 16 is received which is associated with junctions having the set of feature values 15. The cost value 16 can be used, for example, for route search from a starting point to a destination, for dynamical routing, or similar.

Adapting parameters of the junction cost model 5 may be continued even after the junction cost model 5 has been deployed to the navigation device 11. To this end, the navigation device 11 may monitor the behaviour of the vehicle in which it is installed during passage through a junction, may establish the set of feature values 15 associated with the junction based on the map data 14, and may update parameters of the junction cost model 5 based on an analysis of the vehicle behaviour upon passage through the junction and the set of feature values 15. This will be explained in more detail with reference to Fig. 2.

Fig. 2A and 2B are respectively schematic block diagram representations of a vehicle 20. The vehicle 20 has a navigation device 21 and a board network 23. The board network 23 can include a CAN-bus coupled to the navigation device 21 to provide driving data 27 indicative of vehicle conditions thereto.

The navigation device 21 includes a processor 22, a map data base 13 and a junction cost model 5. The map data base 13 and junction cost model 5 may be configured as described with reference to Fig. 1. The map data base 13 may include information that allows the processor 22 to determine, for any junction in the road network, a set of feature values. The set of feature values may include information such as road segment classes and angles between road segments. The junction cost model 5 may be configured such that a cost value for a junction may be retrieved from the junction cost model 5 when queried with a set of feature values. The map data base 13 and junction cost model 5 may include data stored in a storage device or memory 29 of the navigation device 21. A storage device 28, which may be formed integrally with the storage device 29, may have stored thereon instructions which, when executed by the processor 22, direct the processor to perform the adaptation of the junction cost model 5 or the retrieving of cost values for junctions by querying the junction cost model 5 which will be described in more detail below.

Fig. 2A illustrates the navigation device 21 when operative to adjust parameters of the junction cost model 5. The processor 22 receives driving data 27 from the vehicle board network 23 via an interface 26. The driving data 27 may include, for example, a speed or fuel consumption rate, respectively as a function of time. Additional information, such as information on a current location, may be supplied as driving data 27, or may be directly retrieved from a positioning device, such as GPS or other similar positioning devices. The processor 22 analyses the driving data 27 to identify characteristics of, for example, a speed profile when the vehicle passes a junction. The junction area may be identified based on the driving data 27 itself and/or by matching position data with the information on the location of junctions provided by the map data base 13. The identified characteristics may be, for example, a total time delay or total fuel consumption associated with the passage through the junction.

The processor 22 extracts a set of feature values for the respective junction. To this end, the processor 22 reads map data 8 from the map data base 13. The set of feature values may be determined based at least on road classes of the road segments connected to the junction. The processor 22 adjusts the parameters of the junction cost model 5 based on the analysis of the driving data and the associated set of feature values. Aggregation of this information for plural junctions can be performed prior to adjusting the values of the junction cost model. The parameters of the junction cost model 5 may be, for example, entries in a look-up table, coefficients of a mathematical expansion in the feature values, mean values or variances of probability distributions used for simulating passage of the vehicle through the junction, or similar. The processor 22 may perform any one of the methods describes for the processor 2 of Fig. 1, or any other one of the procedures for processing the driving data and set of feature values described herein. For illustration, if the junction cost model 5 is configured as a look-up table, an updated cost value 9 may be written into the look-up table.

While the operation of the navigation device 21 has been illustratively explained with reference to a scenario in which the processor 22 directly processes the driving data 27 received from the vehicle board network 26, the data may be stored for subsequent processing. For illustration, the navigation device may perform an update of parameters of the junction cost model 5 only at pre-defined times or in pre-defined situations, for example when the vehicle is parked. The processor 22 may identify characteristics of the vehicle condition, such as speed profile or fuel consumption rate as a function of time, while the vehicle is driving, may store the characteristics in a storage medium for subsequent updating of the junction cost model 5, and may utilize the stored characteristics in combination with the associated sets of feature values for junctions to update the junction cost model 5 at an appropriate time, for example when the vehicle has been parked.

Fig. 2B illustrates the navigation device 21 when operative to perform a route search or another task which requires information on a cost value associated with a junction or a specific maneuver on a junction. The cost value may for example be a time delay in a fastest route search or a total fuel consumption associated with the junction in a search that is optimized for fuel consumption.

When the cost value associated with a junction is required, the processor 22 retrieves map data 14 from the map data base 13. Based on the map data, the processor 22 determines a set of feature values for the junction. The set of feature values may be an n-tuple of feature values. The feature values may be indicative of a road class of an incoming road segment for a given maneuver on the junction, a road class of an outgoing road segment for the maneuver on the junction, and a direction change on the junction.

The processor 22 uses the set of feature values 15 to access the junction cost model 5 and to receive a cost value 16 from the junction cost model. The cost value 16 is associated with the set of feature values 15 and, thus, with the junction for which the processor 22 requires the cost value. Various implementations for accessing the junction cost model 5 can be provided, depending on the implementation of the junction cost model 5. For illustration, if the junction cost model includes a look-up table, one of the entries may be read out based on the set of features values 15. If the junction cost model includes a mathematical procedure, the feature values 15 may be input thereto, and the procedure may output the cost value associated with the set of feature values.

With reference to Figs. 3-5, methods and devices for providing cost information will be further illustrated. The methods and devices may provide the cost information for junctions by correlating characteristics of a vehicle condition upon passage through junctions with feature values of the junctions determined based on map data.

Fig. 3 is a schematic diagram illustrating a portion of a road network 31. The road network 31 includes junctions 32-35 and road segments 36-42. The road segments 37, 38, 39 indicated by thicker lines represent more important roads according to a road classification, and the road segments 36, 40-42 indicated by thinner lines represent less important road according to the road classification.

Driving data is recorded while a vehicle drives through a plurality of junctions of the road network. For illustration, the vehicle may pass from road segment 36 into road segment 38 at junction 32, thereby making a left turn from a less important road segment into a more important road segment, the importance being specified by the classification. The vehicle may pass from road segment 38 into road segment 39 at junction 33, i.e., continue its travel on a street that is more important, according to the road classification, than the crossing street. The vehicle may pass from road segment 39 into road segment 42 at junction 34, making a left turn from a more important road segment into a less important road segment, the importance being specified by the classification.

A vehicle condition, such as a speed and/or fuel consumption rate as a function of time during these maneuvers may be monitored. Characteristics of the vehicle condition may be extracted from the monitored vehicle condition. By correlating the characteristics obtained for plural different maneuvers on various junctions with sets of features values of the junctions, parameters of a junction cost model may be set or adjusted.

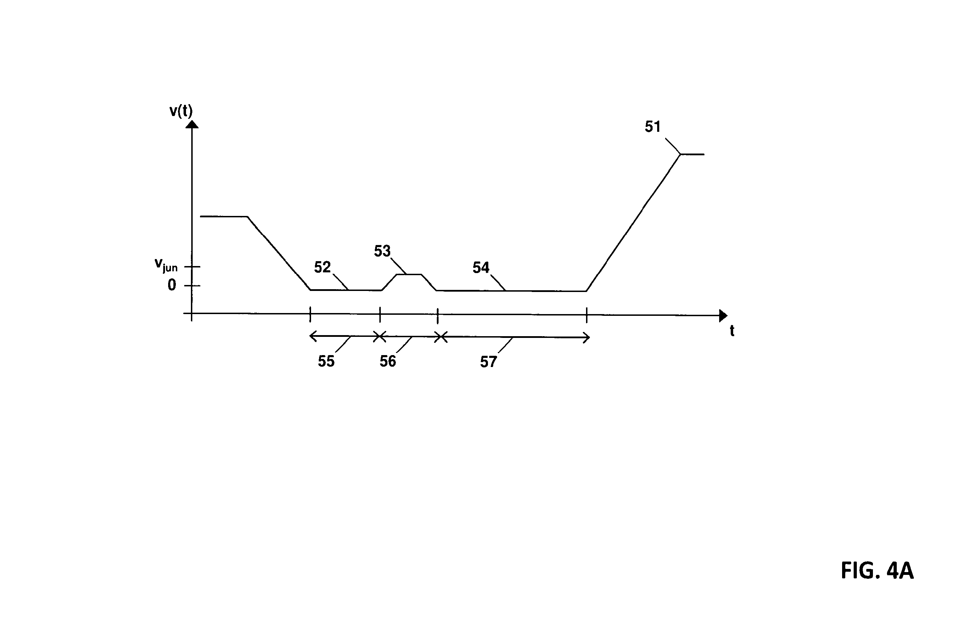

Extraction of characteristics of the vehicle condition monitored as a function of time will be explained for exemplary speed profiles with reference to Figs. 4A-4C.

Fig. 4A illustrates a speed profile 51 as it may be registered when a vehicle makes a turn from a less important road segment to a more important road segment. An example for such a maneuver is turning from road segment 36 into road segment 38 at junction 32 in Fig. 3. Starting from an initial speed, the vehicle decelerates, as indicated by the negative velocity ramp. At 52, the vehicle makes a first stop, caused for example by a traffic light. At 53, the vehicle moves at a slow speed vⱼᵤₙ. At 54, the vehicle makes a second stop. Characteristics of the speed profile that may be extracted include one or more of the number of stops made by the vehicle prior to passing into the outgoing road segment, the time periods 55, 57 for which the vehicle has stopped at the junction, the time period 56 for which the vehicle is travelling at low speed in the junction area, the characteristic speed vⱼᵤₙ in the junction area, or the total time accrued in time periods 55-57.

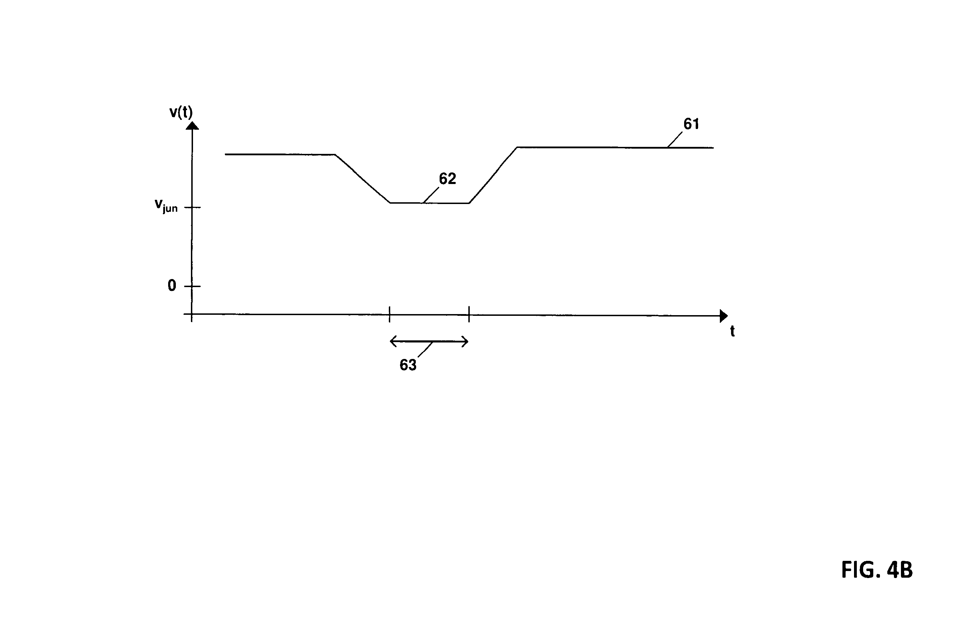

Fig. 4B illustrates a speed profile 61 as it may be registered when a vehicle continues to drive on an important road, i.e., a road having a high classification, at a junction.

An example for such a maneuver is going straight from road segment 38 into road segment 39 at junction 33 in Fig. 3. Starting from an initial speed, the vehicle decelerates, as indicated by the negative velocity ramp. At 62, the vehicle moves at a slower speed vⱼᵤₙ in the junction area. After a time period 63, the vehicle accelerates and continues its travel at an outgoing speed. Characteristics of the speed profile that may be extracted include one or more the time period 62 for which the vehicle is travelling at low speed in the junction area, the characteristic speed vⱼᵤₙ in the junction area, or the total time accrued while passing through the junction area.

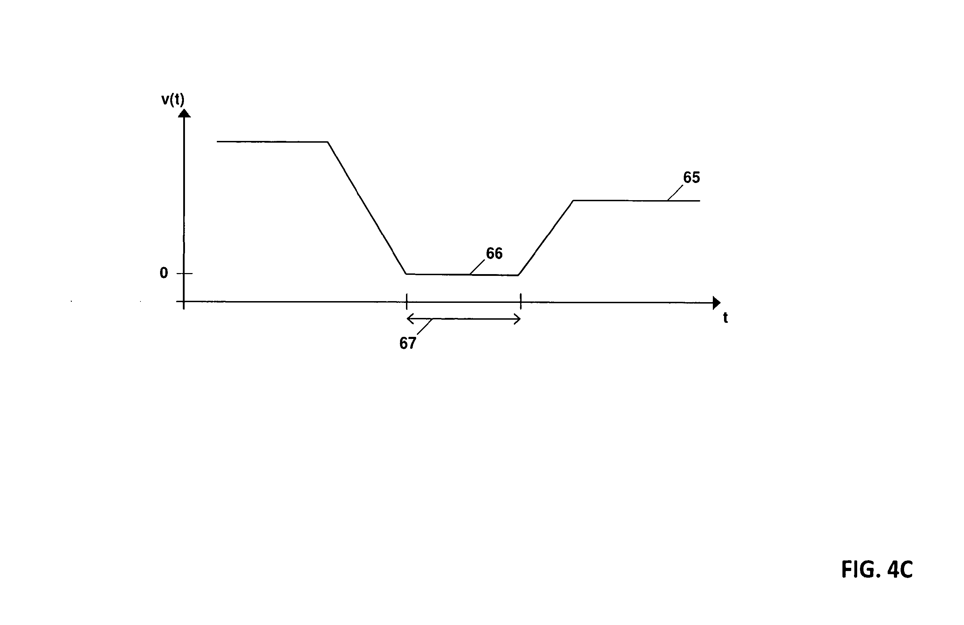

Fig. 4C illustrates a speed profile 65 as it may be registered when a vehicle makes a turn from a more important road segment to a less important road segment. An example for such a maneuver is turning from road segment 39 into road segment 42 at junction 34 in Fig. 3. Starting from an initial speed, the vehicle decelerates, as indicated by the negative velocity ramp. At 66, the vehicle stops prior to passing into the outgoing road segment. After a time period 67, the vehicle accelerates and continues its travel at an outgoing speed. Characteristics of the speed profile that may be extracted include one or more the time period 67 for which the vehicle stops at the junction, or the total time accrued while passing through the junction area.

Alternative or additional characteristics of the vehicle condition may also be established. For illustration, it may be sufficient to determine the total time required for the vehicle to pass the junction. Alternatively or additionally, the total fuel consumption associated with a maneuver associated with passage through a junction may be determined. If no direct information on a fuel consumption rate is available, the information on the fuel consumption may be determined based on a speed profile, using a vehicle model.

The driving data indicative of the vehicle behaviour upon passage through junctions may not only be analyzed to establish characteristics of the speed or fuel consumption as a function of time, but junctions may also be detected based on the driving data. A map matching using position information, which are obtained using a positioning system such as GPS, and map data may additionally or alternatively be employed to identify when a vehicle is passing through junctions.

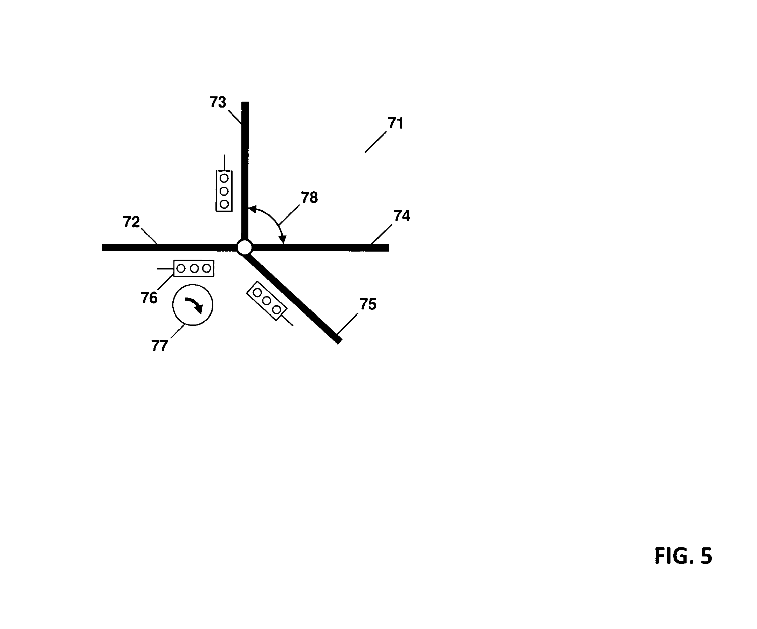

Fig. 5 is a schematic representation of a junction area 71 for illustrating how feature values indicative of a junction may be established based on map data. Road segments 72-75 are connected to the junction. For a junction, the map data may include information on the road segments connected to the junction, for example in terms of road segment identifiers or road names. The map data may include information on road classes of these road segments. The map data may further include information on the presence or absence of traffic lights 76 for the different road segments at the junction. The map data may further include information on turning restrictions, as schematically illustrated at 77. The map data may further include information on the orientation of road segments at the junction. Based on this information on the orientation, angles enclosed by road segments may be determined, as illustrated at 78. The map data may further include information on a traffic pattern on the road segments connected to the junction.

Based on this information derivable from the map data base, a set of feature values may be generated for a junction, or for a particular maneuver on a junction. For illustration, in addition to feature values that are determined based on road classes of road segments connected to the junction and based on information associated with a direction change associated with a maneuver on the junction, the set of feature values may include additional feature values which are indicative of a traffic pattern on the incoming or outgoing road segment, or the presence of a traffic light at the incoming road segment.

By utilizing sets of features values which are n-tuples with n greater than three, more features associated with various types of junctions may be taken into account when adapting the parameters of the junction cost model.

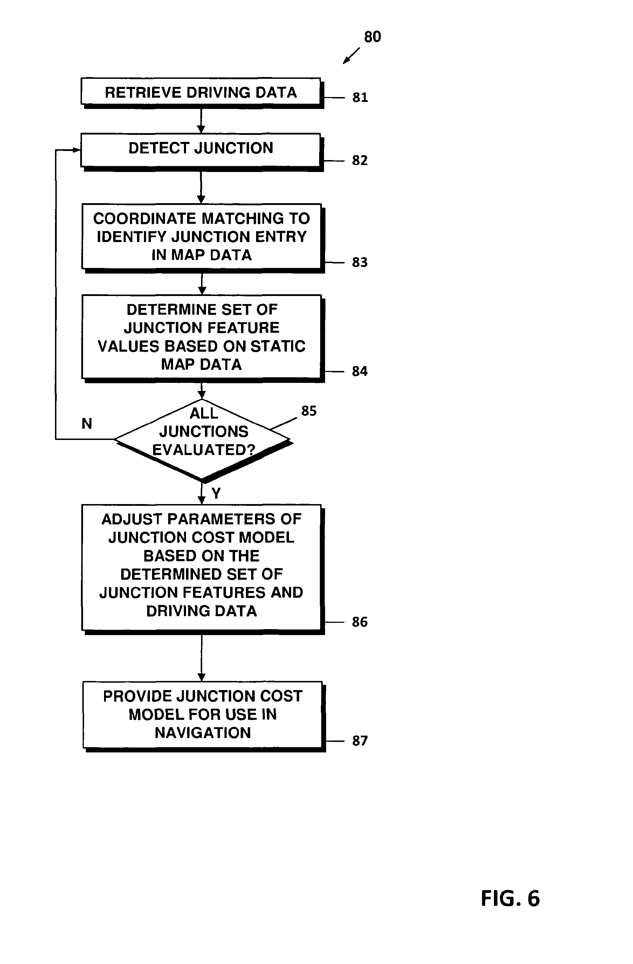

Fig. 6 is a flow diagram representation of a method 80 of adjusting parameters of a junction cost model. The method may be performed by the processor 2 of the computing device 1 of Fig. 1. The method may also be performed by the processor 22 of the navigation device 21 of Fig. 2.

At 81, driving data are retrieved. The driving data include information on a vehicle condition upon passage through junctions of a road network. The vehicle condition may include a speed recorded as a function of time, or a fuel consumption recorded as a function of time. The driving data may be retrieved directly from a vehicle board network or from a storage unit in which a historical log file is stored.

At 82, passage through a junction is detected. Passage through a junction may be detected based on significant deceleration or stops, which can be established based on the driving data. Passage through a junction may also be detected by performing a map matching using position information and information on the location of junctions determined based on map data. Detecting the junction may include identifying a time window in which the vehicle condition is affected by the junction. Threshold comparisons may be performed to identify the time window.

At 83, a coordinate matching is performed to identify a junction entry in the map data that corresponds to a junction for which driving data is available.

At 84, the set of feature values associated with the junction is determined based on map data. The set of feature values may be determined based on static map data. The set of feature values may be determined based on information on road classes of road segments connected to the junction and/or based on the directions of the road segments.

At 85, it is determined whether the driving data include information on the vehicle condition for yet further passages through junctions, which are to be utilized for adjusting the parameters of the junction cost model. If driving data for other passages through junctions are available, the method reverts to 82. Otherwise, the method continues at 86.

At 86, parameters of the junction cost model may be adjusted. This may be done based on characteristics of the driving data for passage through different junctions and the corresponding set of feature values for the respective junction. The characteristics of the driving data may include, for each junction for which steps 82-84 are performed, one or more of information on a total number of times the vehicle has to stop prior to entering the outgoing road segment, the total time spent at the junction, the total fuel consumption incurred at the junction, or a characteristic velocity decrease associated with the junction. The parameters of the junction cost model are adjusted by utilizing the characteristics of the vehicle condition determined based on the driving data, which are correlated with junction feature values determined based on the map data. The characteristics derived from the driving data and the associated set of feature values for the respective junction and maneuver may be aggregated for a plurality of junctions prior to adjusting the parameters of the junction cost model. Different techniques may be utilized to adjust the parameters of the junction cost model, such as regression analysis or simulation techniques.

At 87, the junction cost model may be provided for use in navigation. When information on a cost value, such as a time delay or additional fuel consumption incurred when performing a given maneuver on a given junction, is required, the junction cost model can be accessed to provide this information.

While a method is illustrated in Fig. 6 in which characteristics of driving data and associated sets of feature values are aggregated for plural junction prior to adjusting the set of parameter values, the adjusting at 86 may also be performed whenever, for example, a time delay or total fuel consumption incurred upon passage through a junction and the associated set of feature values are determined. In yet other implementations, the characteristics of the driving data may be evaluated for a plurality of maneuvers on junctions, which are associated with the same set of feature values, and this information may combined to adjust the parameters of the junction cost model.

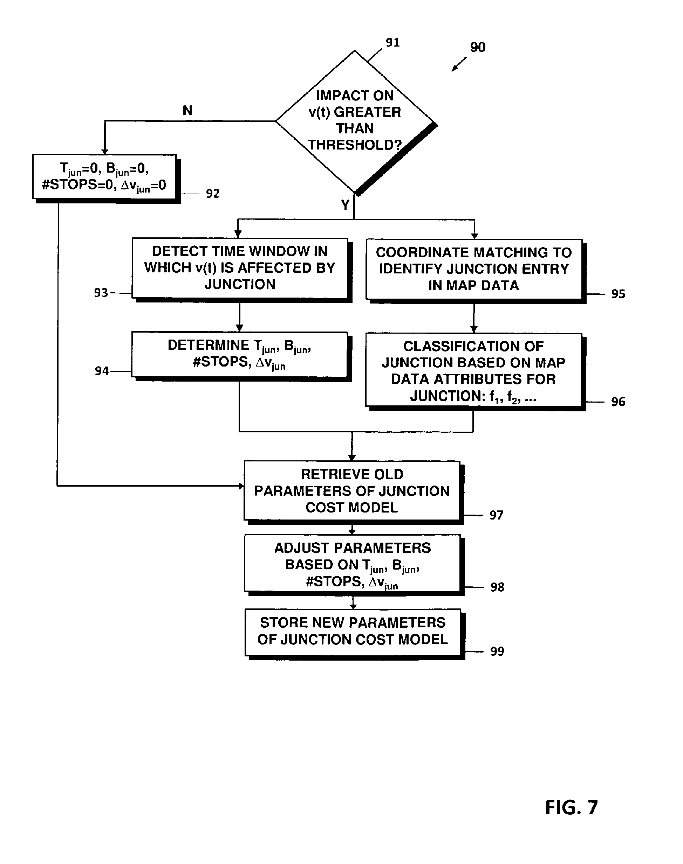

Fig. 7 is a flow diagram representation of a method 90 for adjusting parameters of a junction cost model. The method may be performed by the processor 2 of the computing device 1 of Fig. 1. The method may also be performed by the processor 22 of the navigation device 21 of Fig. 2. The method 90 may be utilized to implement 82-86 of the method of Fig. 6.

At 91, it is determined whether the junction significantly affects the driving condition of the vehicle. In an implementation, a speed change in the junction area may be compared to a threshold to determine whether the junction affects the driving condition in a manner that is significant for the junction cost model.

If it is determined at 91 that the vehicle condition, for example the vehicle speed, is not significantly altered in the junction area, the method proceeds to 92. At 92, the values of one or more characteristics associated with passage through the junction are set. The one or more characteristics may include one or more of the time delay Tⱼᵤₙ incurred at the junction, the additional fuel consumption Bⱼᵤₙ incurred at the junction, the number of times #STOPS the vehicle stops at the junction, and the speed decrease Δvⱼᵤₙ in the junction area. At 92, the values of these characteristics are set so as to indicate that the junction does not significantly affect the vehicle speed profile. In an embodiment, the values of these characteristics may be set to zero before the method proceeds to 97.

If it is determined at 91 that the vehicle condition, for example the vehicle speed, is significantly altered in the junction area, the method proceeds to 93-96. While these steps are illustrated as being partially performed in parallel, they may also be performed in a sequential manner.

At 93, a time window is determined in which the vehicle condition, for example the speed, is affected by the junction. A speed change may be compared to a threshold to determine the window. In an implementation, the time window in which the vehicle condition is affected by the junction may be determined by identifying portions of a speed profile at which the vehicle is travelling on an incoming or outgoing road segment and has an acceleration or deceleration smaller than a threshold. Position information provided by a positioning system, such as GPS, may be combined with the driving data to establish the time window in which the junction affects the vehicle condition.

At 94, the driving data in the time window are evaluated to establish one or more characteristics associated with the maneuver on the junction, which is represented by the driving data. The one or more characteristics may include one or more of the time delay Tⱼᵤₙ incurred at the junction, the additional fuel consumption Bⱼᵤₙ incurred at the junction, the number of times #STOPS the vehicle stops at the junction, and the speed decrease Δvⱼᵤₙ in the junction area. These characteristics may be derived by evaluating the driving data. For illustration, the time delay Tⱼᵤₙ incurred at the junction may be determined based on the length of the time window determined at 93. The fuel consumption Bⱼᵤₙ incurred at the junction may be determined based on the fuel consumption rate integrated over the time window determined at 93.

In implementations, the time delay Tⱼᵤₙ or fuel consumption Bⱼᵤₙ incurred at the junction may further be determined based on costs associated with travelling on the incoming and outgoing road segments. To this end, the section of the incoming road segment and the section of the outgoing road segment that correspond to the junction area as identified at 93 may be determined. Thereby, it may be determined that the speed profile of the vehicle is affected by the junction over a certain length of the incoming road segment and over a certain length of the outgoing road segment. The time delay Tⱼᵤₙ incurred at the junction may be set equal to the length of the time window determined at 93 minus the time delay that the vehicle would incur when traversing the length of the incoming road segment, as determined based on the road segment costs according to a travel time cost model, and minus the time delay that the vehicle would incur when traversing the length of the outgoing road segment, as determined based on the road segment costs according to a travel time cost model. Thereby, double counting of costs in subsequent route search may be avoided. Similarly, when determining the fuel consumption Bⱼᵤₙ incurred at the junction, the fuel consumption rate integrated over the time window determined at 93 may be corrected for the costs, in terms of fuel consumption, which are associated with the portions of the incoming and outgoing road segments located in the junction area.

In parallel to the detecting and determining at 93 and 94, at 95, a coordinate matching is performed to identify an entry in the map data that corresponds to the junction through which the vehicle has passed in the time window. At 96, a classification of the junction is performed based on the entry in the map data. The classification may be performed based on static map data. Map data attributes associated with the junction may be retrieved to determine a set of feature values.

After the characteristics of the vehicle condition associated with passage through the junction and the set of feature values have been determined, the method proceeds to 97.

At 97, the old parameters of the junction cost model are retrieved. In an implementation, the old parameter may be retrieved for the set of feature values determined at 96. The old parameters may include a cost value returned by the junction cost model when queried by the set of feature values determined at 96, and information on a reliability of this value. The information on the reliability may, for example, be indicative of a number of junctions for which the driving data have been analyzed to arrive at the cost value that is presently provided by the junction cost model.

At 98, the parameters of the junction cost model are adjusted based on the characteristics determined based on the driving data. For illustration, if the junction cost model provides travel time information, the cost value indicative of a time delay incurred when performing a given maneuver on the junction may be adjusted based on one or more of the time delay Tⱼᵤₙ, the number of times the vehicle stops at the junction, or the speed decrease Δvⱼᵤₙ in the junction area, as determined at 94 or 92, respectively. The updating may include computing a weighted average of the old cost value and the determined characteristics. For illustration, if the junction cost model provides travel time information, a weighted average of the old cost value and Tⱼᵤₙ may be computed, the weighting factor being determined based on the reliability information. The reliability information may be adjusted accordingly to account for the fact that additional driving data has been evaluated to arrive at the new cost value. In an implementation, if the reliability information is indicative of the number of junctions for which the driving data have been analyzed, this value may be incremented by 1.

At 99, the new parameters of the junction cost model are stored.

The various acts 91-99 may be iteratively performed for a plurality of junctions.

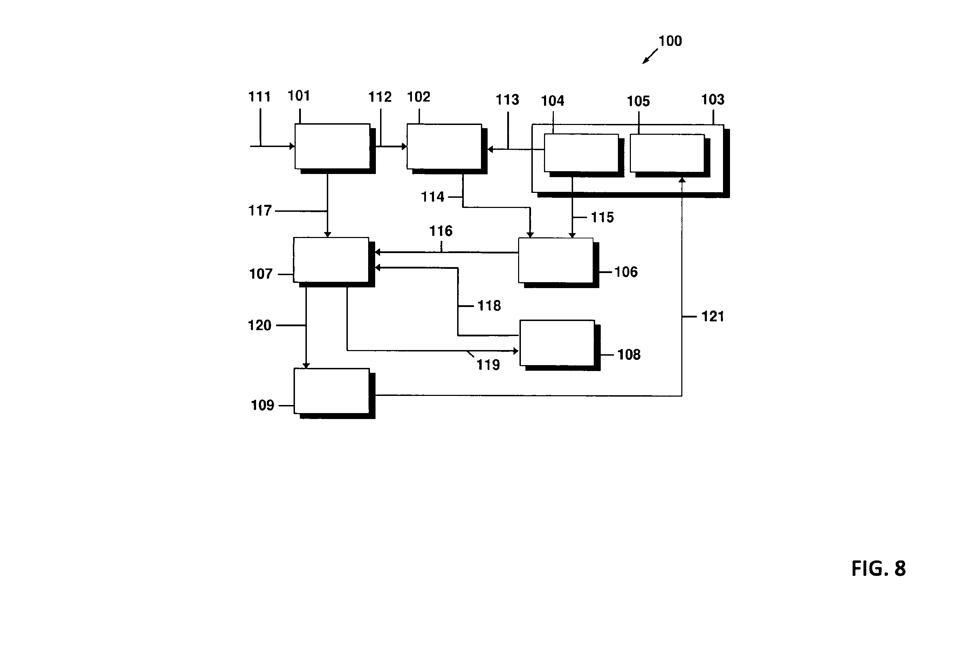

Fig. 8 is a functional block diagram of a device 100 for providing cost information for junctions. While separate functional blocks are shown for illustration, the functions provided by these blocks may be combined in one physical entity. For illustration, the operation of a matching module 102, a classification module 106, a processing module 107 and an aggregation module 109 may all be performed by the processor 2 of the device 1 of Fig. 1 or the processor 22 of the navigation device 21 of Fig. 2.

The device 100 includes an interface 101, the matching module 102, a map data base 103 storing static map data 104 and dynamic map data 105, a classification module 106, a processing module 107, a junction cost model 108, and an aggregation module 109.

Driving data 111 are received at the interface 101. The driving data 111 include information on a vehicle condition upon passage through junctions. The driving data 111 may include a speed and/or fuel consumption rate, respectively as a function of time. Additional information may be included in the driving data, such as position information specifying the vehicle position. Time and day stamps may be included in the driving data, or information on the time and day may be retrieved from other devices when it is desired to account for dynamically changing traffic situations. Further, traffic information signals may also be retrieved.

The matching module 102 retrieves position information 112, which may include information on vehicle coordinates, from the driving data 111. The matching module also retrieves information 113 on junction coordinates from the static map data 104. A matching is performed to determine the identifier for a junction through which the vehicle has passed. The identifier is such that it allows the entry for the junction to be accessed in the map data base 103.

The classification module 106 receives the junction identifier 114 from the matching module 102. Based on the junction identifier 114, the classification module retrieves junction attributes 115 from the static map data 104 and the dynamic map data 105. The junction attributes may include information on crossroads, on road classes, on the presence or absence of traffic signs or on turning restrictions. Based on the junction attributes 115, a set of feature values 116 is determined and provided to the processing module 107. Additional queries may be performed to determine the set of feature values 116. For illustration, the data base 103 may be queried using the time and day information to retrieve information on traffic patterns for incoming and outgoing road segments.

The processing module 107 determines characteristics of a vehicle condition upon passage through the junction. To this end, the processing module 107 analyzes information on a vehicle condition 117 to determine a measurement-based cost value, such as a total time required for passage from the incoming to the outgoing road segment at the junction or a total fuel consumption incurred at the junction.

The processing module 107 retrieves the current parameters 118 of the junction cost model from the junction cost model 108. The retrieving of the parameters 118 may be performed based on the set of feature values 116. The processing module 107 computes new parameters for the junction cost model based on the analysis of the information on the vehicle condition 117 and the parameters 118, which have been retrieved based on the set of feature values 116. A weighting may be performed which takes into account the amount of driving data from which the parameters 118 of the junction cost model have been determined. The processing module 107 then sets the new parameters for the junction cost model 119 and writes the new parameters 119 into the junction cost model 108.

The processing module 107 may also provide results 120 of the analysis performed on the driving data to the aggregation module 109. The results 120 may include information that is suitable for storage in the map data base 103 for subsequent use. For illustration, it may be desirable to store information on a specific junction, through which the vehicle passes frequently, in the map data base 103. The aggregation module 109 aggregates the information 109 and writes adaptive map information 121 into the dynamic map data 105 of the map data base 103.

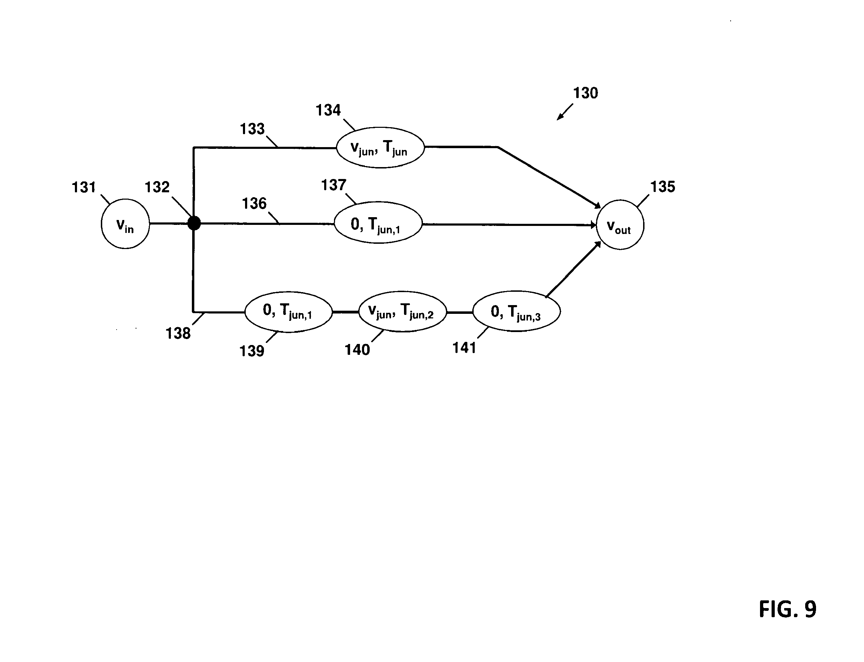

The processing module 107 may perform various procedures in order to adjust parameters of the junction cost model. In an implementation, the processing module 107 may perform a regression analysis on data collected for plural junctions, in the parameter space spanned by the possible sets of feature values. In an implementation, the processing module 107 may perform stochastic simulations to model the speed profile of the vehicle in the junction, as will be explained in more detail with reference to Fig. 9.

In methods and devices for providing cost information for junctions, stochastic simulations may be performed. Plural simulations may be performed for junctions and maneuvers that are classified to have a given set of feature values, and the simulation process may be repeated for different possible sets of feature values. For each one of the simulations, at least one kinematic quantity is chosen according to a probability distribution that is established based on the driving data obtained for junctions that have a given set of feature values.

Fig. 9 is a schematic diagram for illustrating a simulation procedure. Using the procedure, a time delay or fuel consumption incurred at the junction can be simulated over different incoming speeds, outgoing speeds, numbers of times the vehicle has to stop, averaged minimum speeds in the junction area while the vehicle is driving in the junction area, and stop times in the junction area. The parameters for the simulations may be determined based on the driving data, i.e., monitored vehicle behaviour. For each one of the indicated quantities, a mean value, and possibly variance, can be determined based on the driving data that represent plural passages through junctions associated with the specific set of feature values.

At 131, an incoming speed may be selected according to a probability distribution of incoming speeds, or may be set to a fixed value taken from information in the map data on the incoming road segment. A stochastic modelling is performed for passage through the junction having the set of feature values, in which different velocity profiles are generated in a stochastic manner but using realistic physical assumptions. In order to model realistic velocity profiles, a number of times the vehicle stops at the junction and other physical parameters are selected according to random distributions. At 132, a number of stops is selected according to a probability distribution for the number of stops. Depending on whether zero stops, one stop, two stops etc. are selected according to probability distribution at 132, a simplified speed profile will be simulated in one of paths 133 corresponding to zero stops, 136 corresponding to one stop, 138 corresponding to two stops etc. In an implementation, the simplified speed profile is computed assuming that the vehicle has known acceleration and deceleration, and that it is driving with a characteristic minimum speed in between two stops in the junction area after having accelerated or decelerated to that speed.

For the simulation in the path 133 corresponding to zero stops, a characteristic minimum speed in the junction area vⱼᵤₙ indicated at 134 is selected according to a probability distribution for minimum speeds, and a time duration Tⱼᵤₙ for going at the minimum speed is selected according to another probability distribution. An outgoing speed 135 may be selected according to yet another probability distribution, or may be set to a fixed value taken from information in the map data on the outgoing road segment. The speed profile and/or total time required for decelerating from the incoming speed to the randomly selected vⱼᵤₙ, travelling with vⱼᵤₙ for the randomly selected time period Tⱼᵤₙ, and accelerating to vₒᵤₜ may then be readily computed. Using a vehicle model which provides information on a fuel consumption rate as a function of speed, the total fuel consumption associated with this process may also be estimated. Information on acceleration profiles, if available, may also be supplied to the vehicle model so as to obtain a more realistic estimate of the total fuel consumption.

For the simulation in the path 136 corresponding to one stop, a time duration T_{jun,1} for which the vehicle stops prior to passing the junction, indicated at 137, is selected according to a probability distribution for such stop times. The outgoing speed 135 may be selected according to yet another probability distribution, or may be set to a fixed value taken from information in the map data on the outgoing road segment. The speed profile and/or total time required for decelerating from the incoming speed to speed o, waiting for the randomly selected time period T_{jun,1} prior to continuing travel, and accelerating to vₒᵤₜ may then be readily computed. Using a vehicle model which provides information on a fuel consumption rate as a function of speed, the total fuel consumption associated with this process may also be estimated.

For the simulation in the path 138 corresponding to two stops, time durations T_{jun,1} and T_{jun,3} for which the vehicle stops prior to passing the junction, indicated at 139 and 141, may respectively be selected according to a probability distribution for such stop times. Similarly, a characteristic speed vⱼᵤₙ at which the vehicle travels in between the two stops, indicated at 140, is selected according to a probability distribution for minimum speeds, and a time duration T_{jun,2} for which the vehicle travels between the stops is selected according to another probability distribution. The outgoing speed 135 may be selected according to yet another probability distribution, or may be set to a fixed value taken from information in the map data on the outgoing road segment. The speed profile and/or total time required for decelerating from the incoming speed to speed o, waiting for the randomly selected time period T_{jun,1} prior to continuing travel, accelerating to vⱼᵤₙ and going at this speed for the time period T_{jun,2}, decelerating again to speed o, waiting for the randomly selected time period T_{jun,3} prior to continuing travel, and accelerating to vₒᵤₜ may then be readily computed. Using a vehicle model which provides information on a fuel consumption rate as a function of speed, the total fuel consumption associated with this process may also be estimated. Information on acceleration profiles, if available, may also be supplied to the vehicle model so as to obtain a more realistic estimate of the total fuel consumption.

A plurality of such simulations may be performed for any possible set of feature values. The resulting time delay and/or total fuel consumption determined in the simulations may be averaged. The mean values may be utilized to adjust the parameters of the junction cost model. For illustration, if the junction cost model includes a look-up table, the mean value for the time delay and/or total fuel consumption obtained from plural simulations may be written into the look-up table, at a position determined by the set of feature values. The plural simulations may be performed for different sets of feature values.

When the parameters of the junction cost model are adaptively adjusted, the probability distributions utilized in the simulation procedure may be updated based on the driving data. For illustration, if it is determined that the vehicle stops a certain number of times, for example two times, prior to passing into an outgoing road segment of a junction associated with a specific set of feature values, the probability distribution for the number of stops may be updated accordingly. Similarly, the two waiting times that are determined for this passage may be used to update the probability distribution for stop times in the junction. Repeated simulations may be performed at a later time, using the updated probability distributions, to determine new cost values.

The junction cost model may ultimately be used for navigation purposes onboard a vehicle. The junction cost model may be used to obtain information on cost values for example when performing a route search.

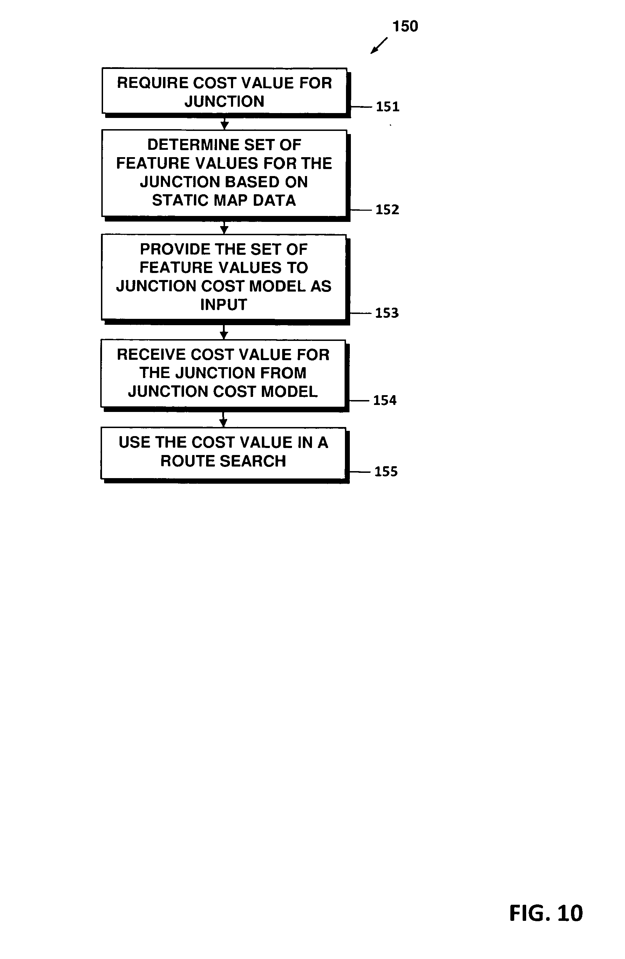

Fig. 10 is a flow diagram representation of a route search method 150 that utilizes a junction cost model. The junction cost model may be configured such that it provides a cost value in response to a set of feature values. The cost value may be a time delay associated with a junction in a fastest route search, or a fuel consumption incurred at the junction in a search for a route associated with minimum fuel consumption.

At 151, it is determined that a cost value for a specific maneuver on a specific junction is required. This may be the case, for example, in an expansion step of a route search algorithm, such as Dijkstra's algorithm or the A*-algorithm.

At 152, the set of feature values associated with the maneuver on the junction is determined. The set of feature values is determined based on static map data. The set of feature values may include a road class of an incoming road segment, a road class of an outgoing road segment, and a direction change encountered when passing from the incoming road segment to the outgoing road segment. Other feature values may be included in the set.

At 153, the set of feature values is used to query a junction cost model. In an implementation, the set of feature values may be used to identify an entry in a look-up table. In another implementation, the junction cost model may perform mathematical operations based on the various feature values in the set, so as to determine an output value representing a cost value.

At 154, a cost value for a maneuver and junction associated with the set of feature values is received from the junction cost model. The cost value may be indicative of a time delay or fuel consumption incurred when performing the maneuver on the junction.

At 155, a route search is performed or continued, using the cost value received at 154.

The method 150 may be performed by a navigation device installed onboard a vehicle, or by another electronic computing device.

In a further embodiment, information in addition to the mean cost value associated with junctions having a given set of feature values may be retrieved from the junction cost model. For illustration, information on a standard deviation of costs associated with the given maneuver on the junction having the set of feature values may be received from the map data base and may be utilized in the route search. This may be desirable when the total variance in costs associated with a route is to be determined.

Additional information may be retrieved prior to querying the junction cost model. For illustration, information on a time of day and day, at which the vehicle is expected to pass through the junction, may be determined to establish traffic patterns for incoming and outgoing road segments based thereon. The traffic patterns may be utilized as feature values to query the junction cost model. Similarly, traffic information signals, such as TMC or TPEG messages, may be utilized in the process of querying the junction cost model.

Methods and devices according to exemplary embodiments have been described with reference to the drawings. Other embodiments may be implemented. For illustration, while methods and devices for providing cost information have been described in which certain feature values are used to train the junction cost model and to later on access information in the junction cost model, other sets of feature values may also be used. For illustration, according to embodiments, the difference of the road class of the incoming road segment and the road class of the outgoing road segment may be used as a feature value. A discretization of a feature value indicative of a direction change may be performed. In embodiments, the feature value indicative of the direction change may be set to correspond to one of left turn, right turn, going straight and U-turn, thereby implementing a 90°-discretization. Other discretizations for the direction change may be used. For any set of feature values or any cost value that is described herein as being associated with a junction, it is to be understood that the set of feature values or cost value may not only depend on the junction, but also on the specific maneuver on the junction. I.e., the set of feature values or cost value may be indicative for a maneuver performed on the junction. Additional or alternative information on junctions may be used as feature values. For illustration, a slope of the incoming and/or outgoing road segments may be used as feature value. A measure of a curvature of the incoming and/or outgoing road segments may be used as a feature value. The measure of the curvature may be determined in various way, e.g., by integrating the radius of curvature or its inverse along the length of the road segment. Information on traffic signs or passing restrictions when travelling from an incoming to an outgoing road segment may also be used as feature values.

In each one of the methods and devices, the junction cost model may include additional information. For illustration, the junction cost model may be configured such that, in response to a set of feature values, it does not only provide information on a cost value associated with a junction having the set of feature values, but also provides information on a statistical distribution of the incurred costs. The information on the statistical distribution may include, for example, a standard deviation or variance of costs determined for junctions having the set of feature values. Correspondingly, adapting the parameters of the junction cost model may include determining a standard deviation or variance of costs, for example for junctions having a given set of feature values. The methods and devices according to embodiments of the invention are well suited to determine this information, as driving data acquired for a plurality of junctions are evaluated to update the junction cost model.

In each one of the methods and devices, dynamical changes in road condition may be accounted for. For illustration, the traffic pattern on incoming and outgoing road segment associated with a maneuver on a given junction may be used as a feature value, instead of or additionally to the road classes of the incoming and outgoing road segments. Information on a time and day may be retrieved and may be utilized to query a dynamic map data base which stores the traffic patterns. Traffic information messages may also be accounted for, both in the process of adjusting parameters of a junction cost model and when using the junction cost model for route determination.

The methods according to embodiments described herein may be performed in a driver-specific manner. Thereby, a learning navigation that takes into account the behaviour of different drivers may be implemented.

While embodiments have been described in the context of cost models that provide information on a time delay for a fastest route search or on a fuel consumption for a least fuel consumption route search, the parameters of plural different junction cost models can be adjusted in parallel according to the methods described herein. For illustration, both a junction cost model providing information on a time delay and a junction cost model providing information on a fuel consumption can be maintained and deployed to navigation devices. Junction cost models that provide yet other cost information, for example information on a number of stops that the vehicle undergoes prior to passing from an incoming to an outgoing road segment, may also be implemented.

## Claims

1. A method of providing cost information associated with junctions (32-35; 71) of a road network (31), said method comprising
- receiving, for a plurality of junctions (32-35; 71), driving data (7; 27; 111, 117) indicative of at least one condition of a vehicle upon passage of the vehicle through the plurality of junctions (32-35; 71),
- for each junction (32-35; 71) of said plurality of junctions (32-35; 71), determining based on map data (8; 115, 116) a set of feature values (9) associated with the respective junction (32-35; 71), and
- adjusting parameters of a junction cost model (5; 108), in particular of a junction cost model (5; 108) indicative of a travel time or fuel consumption incurred upon passage through junctions (32-35; 71), said junction cost model (5; 108) being configured to provide a cost value (16) in response to receiving a set of feature values (15) associated with a junction (32-35; 71), said parameters of said junction cost model (5; 108) being adjusted based on said received driving data (7; 27; 111, 117) and said sets of feature values (9) determined for said plurality of junctions (32-35; 71).

2. The method of claim 1,
wherein, for each junction of said plurality of junctions (32-35; 71), said set of feature values (9) is determined based at least on road classes of road segments (36-42; 72-75) connected to said junction and/or traffic patterns of said road segments (36-42; 72-75) connected to said junction and/or directions (78) of said road segments (36-42; 72-75) at said junction.

3. The method of claim 1 or 2,
wherein, for each junction of said plurality of junctions (32-35; 71), said set of feature values (9) is determined based at least on a road class and/or traffic pattern of an incoming road segment (36-42; 72-75), a road class and/or traffic pattern of an outgoing road segment (36-42; 72-75) and a maneuver classification indicative of a direction change (78) when travelling from said incoming road segment to said outgoing road segment.

4. The method of any one of the preceding claims,
wherein said set of feature values (9) is an n-tuple with n greater than or equal to 2, in particular with n greater than or equal to 3, and said junction cost model (5; 108) is configured to provide said cost value (16) in response to receiving an n-tuple of feature values (15).

5. The method of any one of the preceding claims, comprising determining, for a selected set of feature values (9), a measurement-based cost value associated with a junction (32-35; 71) having said selected set of feature values (9), wherein said measurement-based cost value (16) is determined based on said driving data (7; 27; 111, 117) for said junction (32-35; 71) having said selected set of feature values (9), and wherein said parameters of said junction cost model (5; 108) are adjusted based on said measurement-based cost value (16).

6. The method of claim 5,
wherein said driving data (7; 27; 111, 117) include information on a speed (51, 61, 65) or fuel consumption of said vehicle as a function of time, which is analyzed to determine said measurement-based cost value (16).

7. The method of claim 5 or claim 6,
wherein said measurement-based cost value (16) is determined so as to be indicative of a total time or a total fuel consumption incurred upon passage through said junction (32-35; 71) having said selected set of feature values (9).

8. The method of any one of claims 5-7,
wherein said determining said measurement-based cost value (16) includes performing plural simulations of a passage of said vehicle through said junction having said selected set of feature values (9), each one of said simulations being performed based on at least one model parameter selected according to a random distribution.

9. The method of any one of claims 5-8,
wherein said determining a measurement-based cost value (16) is respectively performed for a plurality of selected sets of feature values (9).

10. The method of claim 9,
wherein a regression analysis is performed on said measurement-based cost values determined for said plurality of selected sets of feature values (9).

11. The method of any one of the preceding claims,
wherein said driving data (7; 27; 111, 117) are received from a board network (23) of said vehicle, and said adjusting said parameters is performed onboard said vehicle.

12. The method of any one of the preceding claims, comprising retrieving traffic information signals associated with incoming and outgoing road segments of said plurality of junctions (32-35; 71), said traffic information signals indicating a traffic condition on said incoming and outgoing road segments upon passage of the vehicle through the respective junctions (32-35; 71),
said parameters of said junction cost model (5; 108) being adjusted based on said traffic information signals.

13. A computing device (1; 21; 100), in particular a computing device configured as a vehicle navigation device, comprising
an interface (6; 26; 101) configured to receive, for a plurality of junctions (32-35; 71), driving data (7; 27; 111, 117) indicative of at least one condition of a vehicle upon passage of the vehicle through the respective junctions (32-35; 71),
a storage unit (3; 29; 103) configured to store map data (8; 104,115_{,} 116), and
a processor (2; 22; 102, 106-109) configured
- to determine, for each junction (32-35; 71) of said plurality of junctions (32-35; 71), based on said map data (8; 115, 116) a set of feature values (9) associated with the respective junction (32-35; 71), and
- to adjust parameters of a junction cost model (5; 108), in particular of a junction cost model (5; 108) indicative of a travel time or fuel consumption incurred upon passage through junctions (32-35; 71), said junction cost model (5; 108) being configured to provide a cost value (16) in response to receiving a set of feature values (15) associated with a junction (32-35; 71), said processor (2; 22; 102, 106-109) being configured to adjust said parameters of said junction cost model (5; 108) based on said driving data (7; 27; 111, 117) received at said interface and said sets of feature values (9) determined for said plurality of junctions (32-35; 71).

14. A computer program product comprising instruction code which, when executed by a processor (2; 22; 102, 106-109) of a computing device (1; 21), directs the processor (2; 22; 102, 106-109) to perform the method of any one of the claims 1-12.

15. A method of determining a route on a road network, comprising
- identifying a junction (32-35; 71) for which a cost value (16) is to be determined,
- determining, based on map data (8; 115, 116), a set of feature values (15) associated with said identified junction (32-35; 71),
- providing said determined set of feature values (15) as input parameters to a junction cost model (5; 108),
- retrieving from said junction cost model (5; 108) a cost value (16) for said identified junction (32-35; 71) in response to said set of feature values (15), and
- using said cost value (16) provided by said junction cost model (5; 108) in a route search.
